# EUROPEAN PATENT APPLICATION

(11) **EP 2 242 302 A1**
(43) Date of publication of application: **20.10.2010**
(21) Application number: 09705175.9
(22) Date of filing: 28.01.2009
(51) Int. Cl.: H04W 24/10, H04W 28/06

(54) **RELAY DEVICE, COMMUNICATION SYSTEM, AND COMMUNICATION METHOD**

(30) Priority: 30.01.2008 JP 2008019685
(71) Applicant: Sharp Kabushiki Kaisha, Osaka-shi, Osaka 545-8522 (JP)
(72) Inventor: NAKAMURA, Osamu SHARP KABUSHIKI KAISHA, Osaka-shi, Osaka 545-8522 (JP); ONODERA, Takashi SHARP KABUSHIKI KAISHA, Osaka-shi, Osaka 545-8522 (JP); NOGAMI, Toshizo SHARP KABUSHIKI KAISHA, Osaka-shi, Osaka 545-8522 (JP); NAKANO, Hiroshi SHARP KABUSHIKI KAISHA, Osaka-shi, Osaka 545-8522 (JP)
(74) Representative: Müller - Hoffmann & Partner
(86) International application number: PCT/JP2009/051319
(87) International publication number: WO 2009/096406

(57) **Abstract**

A relay apparatus (400) compresses an information amount of channel quality information notified from a plurality of terminal apparatus (200)es to notify a control station apparatus (190), and thereby improves spectral efficiency. The relay apparatus (400) 400, which is applied to a communication system in which a control station apparatus (190) and a terminal apparatus (200) perform wireless communications using a plurality of sub-channels and relays the communications between the control station apparatus (190) and the terminal apparatus (200), has a receiving section (402) 402 that receives channel quality information indicative of channel quality of sub-channels from the terminal apparatus (200), a compressing section (405) 405 that compresses an information amount of the received channel quality information and that generates notification information to notify the control station apparatus (190), and a transmitting section 406 that transmits the generated notification information to the control station apparatus (190).

## Description

### Technical Field

The present invention relates to a relay apparatus, communication system and communication method for relaying wireless communications between a control station apparatus and terminal apparatus.

### Background Art

In next-generation mobile communication, it is expected that the carrier frequency will be increased. When the carrier frequency is increased, the propagation loss of radio signal is increased, and the cell size is thereby reduced. In order to achieve coverage similar to conventional one, installation of additional base station apparatuses is required, but results in increases in cost. Therefore, systems have been considered that a relay apparatus is installed between the base station apparatus and mobile station apparatus. The mobile station apparatus only needs to perform communications with the relay apparatus, instead of the base station apparatus existing in the distance, and is able to reduce the transmission power significantly.

Non-patent Document 1 proposes a system suitable for adaptive modulation techniques using a relay apparatus. Referring to FIG. 19, Non-patent Document 1 will be described below. Amobile station apparatus m1 performs communications by high-efficient data modulation such as 64QAM (Quadrature Amplitude Modulation) since propagation conditions from a base station apparatus 190 are good. With respect to a mobile station apparatus m2, it is assumed that propagation conditions from the base station apparatus 190 are poor, and that QPSK (Quadrature Phase Shift Keying) is applied. However, since propagation conditions from a relay apparatus 191 are good, by selecting a relay path from the relay apparatus 191, it is possible to perform communications using higher-efficient data modulation such as 16QAM. Non-patent Document 1: Ryo Hasegawa, Raiz Esmailzadeh, Hoang Nam Nguyen, Masao Nakagawa, "Multi-hop System for Adaptive Modulation using Regenerating Fixed Hop Stations", IEICE, Technical Report, RCS2004-210

### Disclosure of Invention

### Problems to be Solved by the Invention

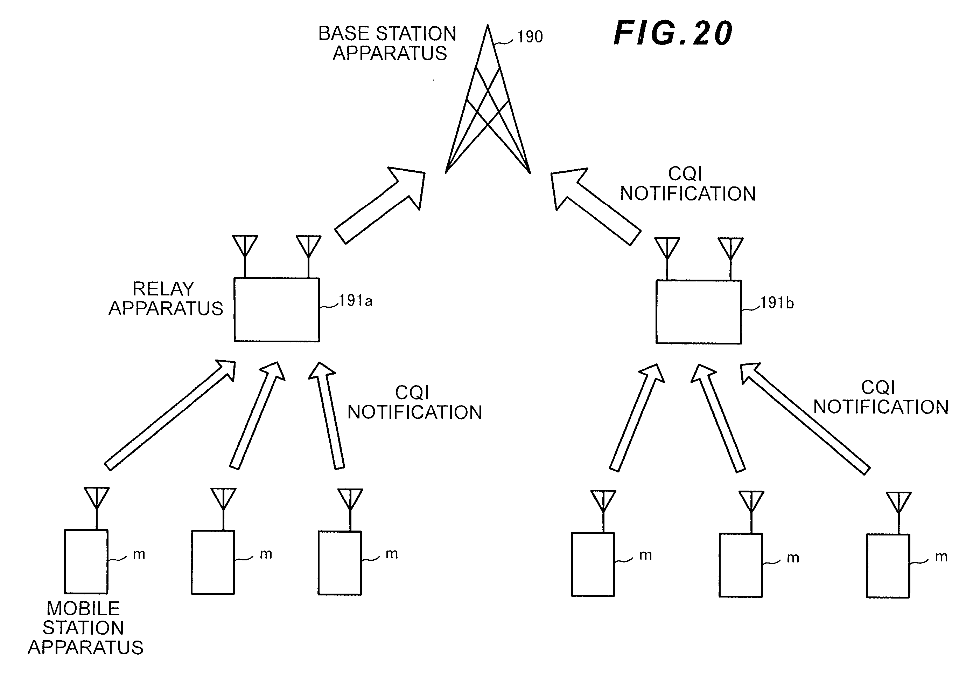

To perform adaptive modulation and scheduling on the downlink, as shown in FIG. 20, each mobile station apparatus m needs to notify the base station apparatus 190 of reception channel quality information (CQI: Channel Quality Indicator) using the uplink. When communications are performed using relay apparatuses 191a, 191b also on the uplink, each mobile station apparatus m notifies the relay apparatus 191a or 191b of a CQI, the relay apparatuses 191a, 191b are required to further notify the base station apparatus of the same CQI, and therefore, there is a problem of increases in overhead. Increases in the information amount of notified CQI results in deterioration of spectral efficiency.

The present invention was made in view of such circumstances, and it is an object of the invention to provide a relay apparatus, communication system and communication method in which the relay apparatus compresses an information amount of channel quality information notified from a plurality of terminal apparatuses to notify a control station apparatus, and it is thereby possible to improve spectral efficiency.

### Means for Solving the Problem

(1) To at tain the aforementioned object, the invention took measures as described below. In other words, a relay apparatus of the invention is applied to a communication system in which a control station apparatus and a terminal apparatus perform wireless communications using a plurality of sub-channels, relays the communications between the control station apparatus and the terminal apparatus, and is characterized by having a receiving section that receives channel quality information indicative of channel quality of sub-channels from the terminal apparatus, a compressing section that compresses an information amount of the received channel quality information and that generates notification information to notify the control station apparatus, and a transmitting section that transmits the generated notification information to the control station apparatus.

Thus, the information amount of the received channel quality information is compressed to generate the notification information to notify the control station apparatus, and it is thereby possible to reduce the information amount for the relay apparatus to notify the control station apparatus. By using the saved resources for communications of information data, it is possible to improve spectral efficiency.

(2) Further, in the relay apparatus of the invention, features are that the receiving section receives the channel quality information from a plurality of terminal apparatuses, and that the compressing section selects a part from a plurality of received channel quality information to generate the notification information.

Thus, the notification information is generated by selecting a part from a plurality of received channel quality information, and it is thereby possible to reduce the information amount for the relay apparatus to notify the control station apparatus. By using the saved resources for communications of information data, it is possible to improve spectral efficiency.

(3) Furthermore, in the relay apparatus of the invention, the compressing section is characterized by selecting the channel quality information in descending order of the reception quality.

Thus, the channel quality information is selected in descending order of the reception quality, and it is thereby possible to preferentially select channels with good propagation path conditions, while reducing the information amount.

(4) Still furthermore, in the relay apparatus of the invention, the compressing section is characterized by preferentially selecting the channel quality information with the highest reception quality from each sub-channel one by one.

Thus, the channel quality information with the highest reception quality is preferentially selected from each sub-channel one by one, and it is thereby possible to keep the number of pieces of the channel quality information to select at a substantially certain value among the sub-channels.

(5) Moreover, in the relay apparatus of the invention, the compressing section is characterized by selecting the channel quality information so that a difference in the number of pieces of the channel quality information selected in each terminal apparatus is smaller than a predetermined value.

Thus, the channel quality information is selected so that a difference in the number of pieces of the channel quality information selected in each terminal apparatus is smaller than a predetermined value, and it is thereby possible to keep the number of channels allocated to each user at a substantially certain value.

(6) Further, the relay apparatus of the invention is characterized by further having a moving speed detecting section that acquires moving speed information of the terminal apparatus, and **characterized in that** the compressing section preferentially selects the channel quality information of a terminal apparatus with the acquired moving speed being low.

Thus, by preferentially selecting the channel quality information of a terminal apparatus with the moving speed being low, it is possible to preferentially select a channel with good communication conditions, while reducing the information amount.

(7) Furthermore, the relay apparatus of the invention is characterized by further having a QoS level information acquiring section that acquires QoS (Quality of Service) level information on the downlink of the terminal apparatus, and **characterized in that** the compressing section preferentially selects the channel quality information of a terminal apparatus with the acquired QoS level being high.

Thus, by preferentially selecting the channel quality information of a terminal apparatus with the QoS level being high, it is possible to preferentially select a channel with good communication conditions, while reducing the information amount.

(8) Still furthermore, in the relay apparatus of the invention, features are that the receiving section receives channel quality information of a plurality of channels from the terminal apparatus, and that the compressing section groups the channel quality information of the plurality of channels into at least one group, generates group quality information from channel quality information belonging to the group, and selects at least one group quality information to generate the notification information.

Thus, all of the channel quality information notified from the terminal apparatus is not notified to the control station apparatus, but is grouped, the information amount is thus reduced, and then, the channel quality information is notified to the control station apparatus as the notification information. It is thereby possible to reduce the information amount of the channel quality information to the control station apparatus from the relay apparatus.

(9) Moreover, in the relay apparatus of the invention, features are that the receiving section receives orthogonally transformed reception quality information obtained by performing orthogonal transform on the reception quality for each sub-channel from the terminal apparatus, and that the compressing section selects part of the orthogonally transformed reception quality information to generate the notification information.

Thus, instead of notifying the control station apparatus of all of the channel quality information notified from the terminal apparatus, the relay apparatus reduces the number of points of DCT, thereby reduces the information amount, and notifies the control station apparatus of the channel quality information as the notification information, and it is thereby possible to reduce the information amount of the channel quality information to the control station apparatus from the relay apparatus.

(10) Further, in the relay apparatus of the invention, the compressing section is characterized by reducing the number of quantization bits indicative of the channel quality information to generate the notification information.

Thus, instead of notifying the control station apparatus of all of the channel quality information notified from the terminal apparatus, the relay apparatus reduces the number of quantization bits, thereby reduces the information amount, and notifies the control station apparatus of the channel quality information as the notification information, and it is thereby possible to reduce the information amount of the channel quality information to the control station apparatus from the relay apparatus.

(11) Further, a communication system of the invention is a communication system in which a control station apparatus and a terminal apparatus perform wireless communications using a plurality of sub-channels via a relay apparatus, and is **characterized in that** the terminal apparatus transmits channel quality information indicative of channel quality of sub-channels to the relay apparatus, the relay apparatus compresses an information amount of the channel quality information received from the terminal apparatus to generate notification information, and transmits the generated notification information to the control station apparatus, and that the control station apparatus receives the notification information from the relay apparatus.

Thus, the information amount of the received channel quality information is compressed to generate the notification information to notify the control station apparatus, and it is thereby possible to reduce the information amount for the relay apparatus to notify the control station apparatus. By using the saved resources for communications of information data, it is possible to improve spectral efficiency.

(12) Furthermore, a communication system of the invention is characterized by being comprised of a relay apparatus as described in any one of claims 1 to 10, at least one terminal apparatus that transmits channel quality information indicative of reception quality of sub-channels to the relay apparatus, and a control station apparatus that receives the channel quality information with an information amount compressed from the relay apparatus.

Thus, the information amount of the received channel quality information is compressed to generate the notification information to notify the control station apparatus, and it is thereby possible to reduce the information amount for the relay apparatus to notify the control station apparatus. By using the saved resources for communications of information data, it is possible to improve spectral efficiency.

(13) Further, a communication method of the invention is a communication method of a relay apparatus that is applied to a communication system in which a control station apparatus and a terminal apparatus perform wireless communications using a plurality of sub-channels and that relays the communications between the control station apparatus and the terminal apparatus, and includes at least steps of receiving, in a receiving section, channel quality information indicative of channel quality of sub-channels from the terminal apparatus, compressing, in a compressing section, an information amount of the received channel quality information and generating notification information to notify the control station apparatus, and transmitting, in a transmitting section, the generated notification information to the control station apparatus.

Thus, the information amount of the received channel quality information is compressed to generate the notification information to notify the control station apparatus, and it is thereby possible to reduce the information amount for the relay apparatus to notify the control station apparatus. By using the saved resources for communications of information data, it is possible to improve spectral efficiency.

### Advantageous Effect of the Invention

According to the invention, since the information amount of the received channel quality information is compressed to generate the notification information to notify the control station apparatus, it is possible to reduce the information amount for the relay apparatus to notify the control station apparatus. By using the saved resources for communications of information data, it is possible to improve spectral efficiency.

### Brief Description of Drawings

FIG. 1 is a diagram illustrating usage of resources;
FIG. 2 is a block diagram illustrating a schematic configuration of a mobile station apparatus;
FIG. 3 is a block diagram illustrating a schematic configuration of a CQI generating section;
FIG. 4 is a block diagram illustrating a schematic configuration of a relay apparatus;
FIG. 5 is a diagram illustrating CQIs notified from each mobile station apparatus and multiplexing of the CQIs of each mobile station apparatus in the relay apparatus;
FIG. 6 is a diagram illustrating reductions in the information amount of CQIs;
FIG. 7 is another diagram illustrating reductions in the information amount of CQIs;
FIG. 8 is still another diagram illustrating reductions in the information amount of CQIs;
FIG. 9 is a block diagram illustrating a schematic configuration of a base station apparatus;
FIG. 10 is a diagram showing a table for the base station apparatus to use in performing scheduling;
FIG. 11 is a diagram illustrating the relationship between the channel quality and channel before grouping and after grouping;
FIG. 12 is a diagram illustrating a schematic configuration of a CQI generating section;
FIG. 13 is a diagram illustrating a result of performing DCT on reception quality of 64 sub-channels;
FIG. 14 is a diagram illustrating a result of reducing sample values of 64 points to 32 points;
FIG. 15 is a diagram illustrating a result of performing IDCT;
FIG. 16 is a diagram illustrating a result of selecting 16 points from the result of DCT;

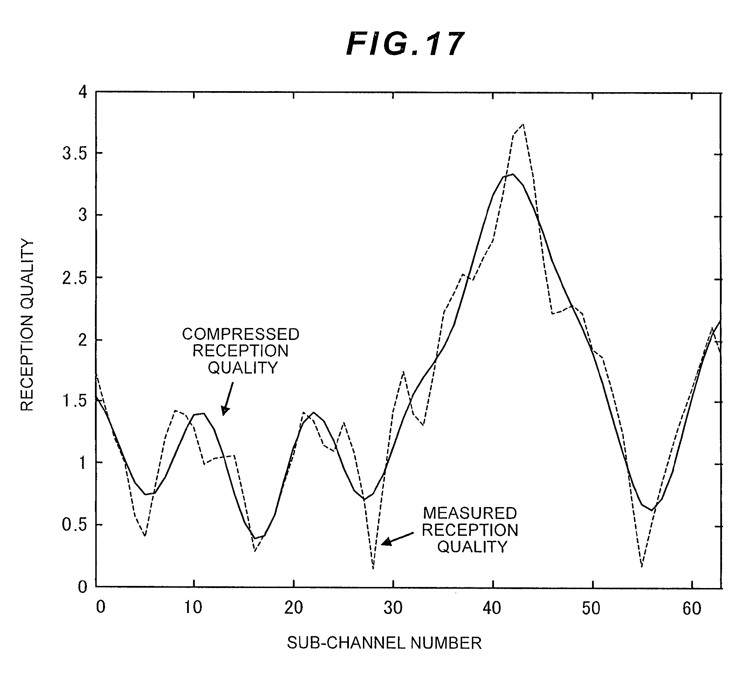

FIG. 17 is a diagram illustrating a result of performing IDCT;
FIG. 18 is a diagram illustrating the number of quantization bits of the CQI for the mobile station apparatus to notify the relay apparatus, and the number of bits of the CQI quantized in the relay apparatus;

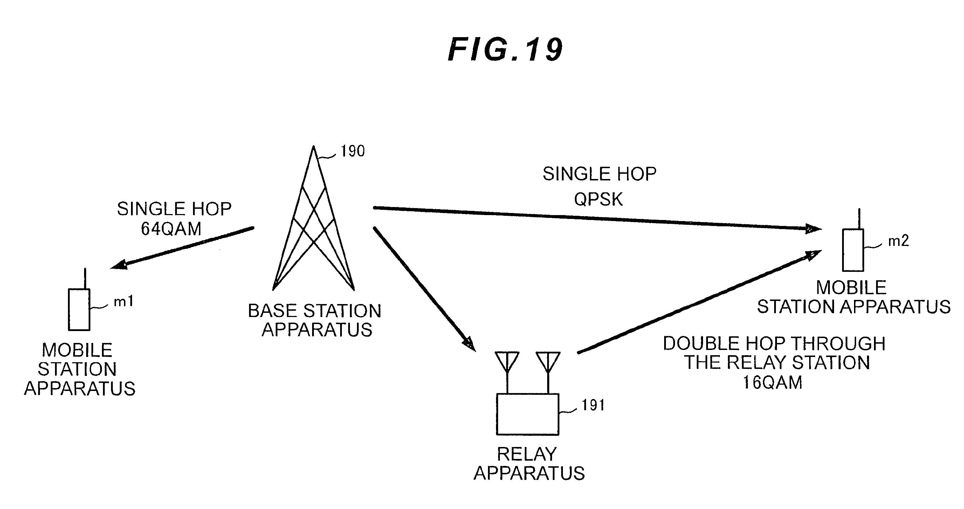

FIG. 19 is a diagram illustrating a conventional communication system; and
FIG. 20 is a diagram illustrating notification of CQIs in the conventional communication system. Description of Symbols

- 190: Base station apparatus
- 191: Relay apparatus
- 191a, 191b: Relay apparatus
- 200: Mobile station apparatus
- 201: Coding section
- 202: Mapping section
- 203: Multiplexing section
- 204: CQI generating section
- 204a: Subcarrier quality measuring section
- 204b: Sub-channel quality measuring section
- 204c: Top-M selecting section
- 204d: DCT section
- 204e: number-of-sample varying section
- 205: Radio transmission section
- 206: Antenna
- 207: Radio reception section
- 208: Demultiplexing section
- 209: Channel estimation section
- 210: Channel compensation section
- 211: Demapping section
- 212: Decoding section
- 400: Relay apparatus
- 401: Antenna
- 402: Radio reception section
- 403: Demultiplexing section
- 404: Multiplexing section
- 405: CQI compressing section
- 406: Radio transmission section
- 407: Detecting section
- 900: Base station apparatus
- 901: Antenna
- 902: Radio reception section
- 903: Demultiplexing section
- 904: Channel estimation section
- 905: Channel compensation section
- 906: Demapping section
- 907: Decoding section
- 908: Scheduling section
- 909: Coding section
- 910: Mapping section
- 911: Multiplexing section
- 912: Radio transmission section

### Best Mode for Carrying Out the Invention

Embodiments according to the invention will be described below with reference to drawings. In the Embodiments, a relay apparatus reduces an information amount of CQIs (Channel Quality Indicator) notified from a plurality of mobile station apparatuses, and notifies a base station apparatus of the CQIs with the information amount reduced. The relay apparatus reduces the information amount of CQIs to notify the base station apparatus, and it is thereby possible to reduce resources for the relay apparatus to notify the base station apparatus of the CQIs. In addition, in the Embodiments, it is assumed that the control station apparatus corresponds to the base station apparatus, and that the terminal apparatus corresponds to the mobile station apparatus, but the invention is not limited thereto. For example, the control station apparatus may be an access point in a wireless LAN, and the terminal apparatus may be a computer in a wireless LAN. Further, the mobile station apparatus used by a user may be referred to simply as a user.

### (Embodiment 1)

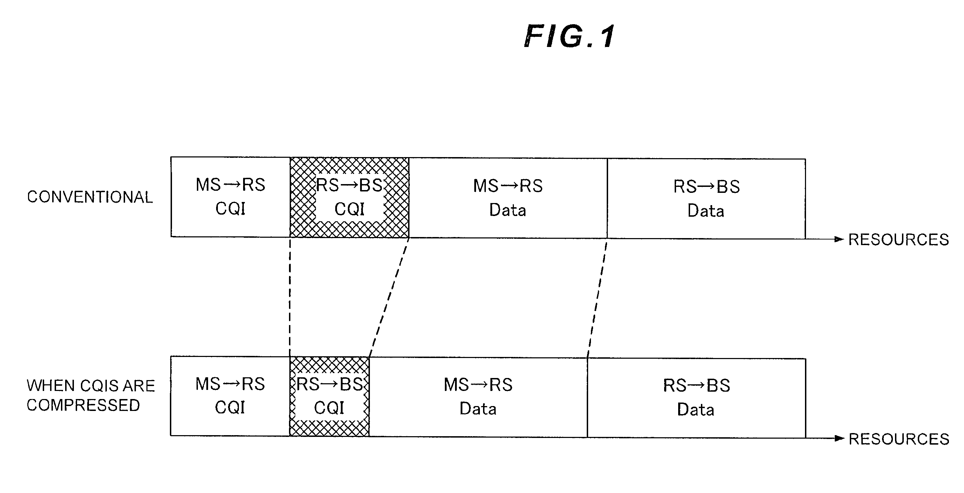

FIG. 1 is a diagram illustrating usage of resources. As shown in FIG. 1, when the information amount of CQIs is reduced, by using the saved resources for resources for communications of information data, it is possible to improve spectral efficiency with respect to the conventional case.

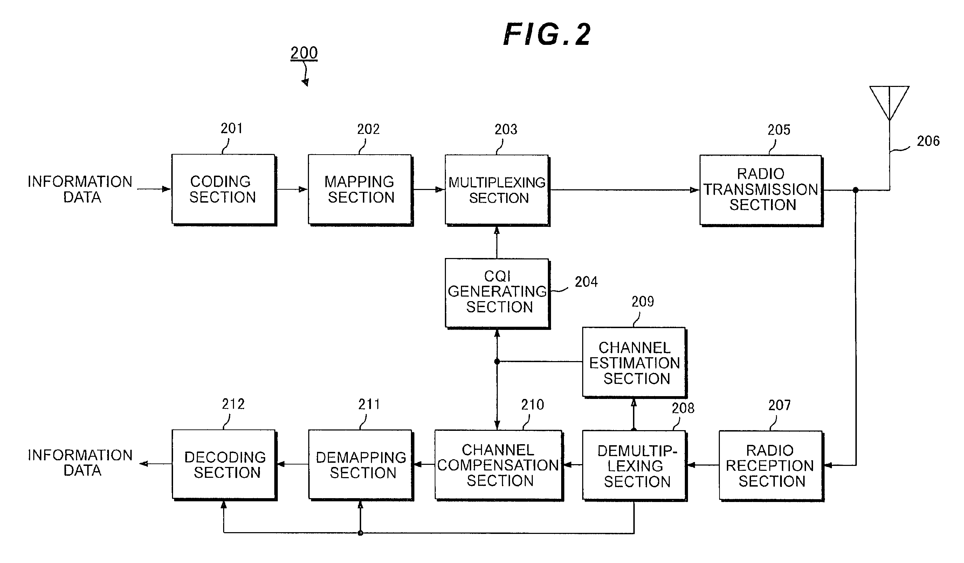

FIG. 2 is a block diagram illustrating a schematic configuration of a mobile station apparatus according to this Embodiment. As shown in FIG. 2, the mobile station apparatus 200 has a coding section 201, mapping section 202, multiplexing section 203, CQI generating section 204, radio transmission section 205, antenna 206, radio reception section 207, demultiplexing section 208, channel estimation section 209, channel compensation section 210, demapping section 211, and decoding section 212. Information data of the mobile station apparatus 200 is input to the coding section 201. The coding section 201 performs error correcting coding on the data, and outputs the resultant to the mapping section 202. The mapping section 202 performs digital modulation such as QPSK and 16QAM on an output bit sequence of the coding section 201 to assign to predetermined subcarriers, and outputs the resultant to the multiplexing section 203. The multiplexing section 203 multiplexes the output of the mapping section 202, CQIs output from the CQI generating section 204 described later, pilot signal, etc. The signal multiplexed in the multiplexing section 203 is output to the radio transmission section 205. The radio transmission section 205 generates an analog signal waveform from the baseband digital signal, and performs radio transmission using the antenna 206.

Described next is reception processing in the mobile station apparatus 200. A signal received in the antenna 206 is converted into a baseband digital signal in the radio reception section 207. The output of the radio reception section 207 is input to the demultiplexing section 208. The demultiplexing section 208 outputs a pilot signal to the channel estimation section 209, outputs a reception data portion to the channel compensation section 210, and further outputs control information of scheduling to the demapping section 211 and decoding section 212. The channel estimation section 209 estimates a channel in each frequency using the received pilot signal demultiplexed in the demultiplexing section 208. The channel estimation value is input to the CQI generating section 204 and channel compensation section 210.

The channel compensation section 210 performs channel compensation on the received data signal demultiplexed in the demultiplexing section 208 to output to the demapping section 211. Based on the control information of scheduling demultiplexed in the demultiplexing section 208, the de mapping section 211 decomposes the data signal input from the channel compensation section 210 into bit sequences to output to the decoding section 212. Based on the control information of scheduling demultiplexed in the demultiplexing section 208, the decoding section 212 performs error correcting decoding, and outputs information data.

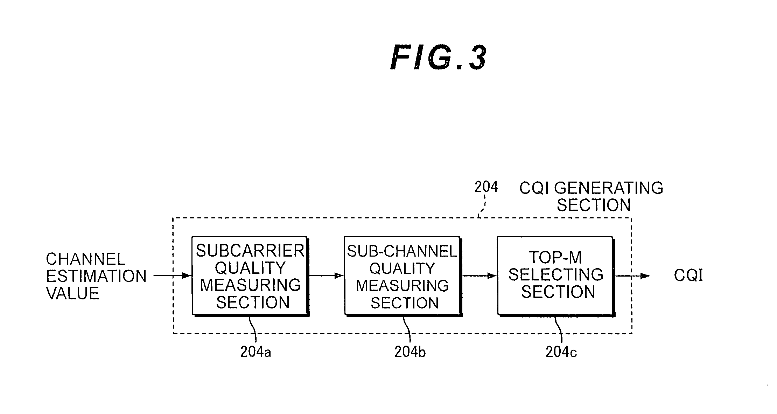

FIG. 3 is a block diagram illustrating a schematic configuration of the CQI generating section 204 as shown in FIG. 2. As shown in FIG. 3, the CQI generating section 204 has a subcarrier quality measuring section 204a, sub-channel quality measuring section 204b, and Top-M selecting section 204c. The channel estimation value output from the channel estimation section 209 as shown in FIG. 2 is input to the subcarrier quality measuring section 204a. The subcarrier quality measuring section 204a calculates a value indicative of communication quality such as SNR (Signal-to-Noise power Ratio), CNR (Carrier-to-Noise power Ratio), and MCS (Modulation and Coding Scheme) using the input channel estimation value.

The communication quality for each subcarrier measured in the subcarrier quality measuring section 204a is input to the sub-channel quality measuring section 204b. The sub-channel quality measuring section 204b obtains quality for each sub-channel based on the communication quality for each subcarrier to output to the Top-M selecting section 204c. In addition, a sub-channel is the set of one or more subcarriers . Further, the method of determining quality of a sub-channel may be any method such as averaging in the sub-channel, and maximum or minimum quality. The Top-M selecting section 204c selects the communication quality of M (M is an integer of "1" or more) sub-channels in descending order of the communication quality for each sub-channel, and outputs the communication quality to the multiplexing section 203 as CQIs.

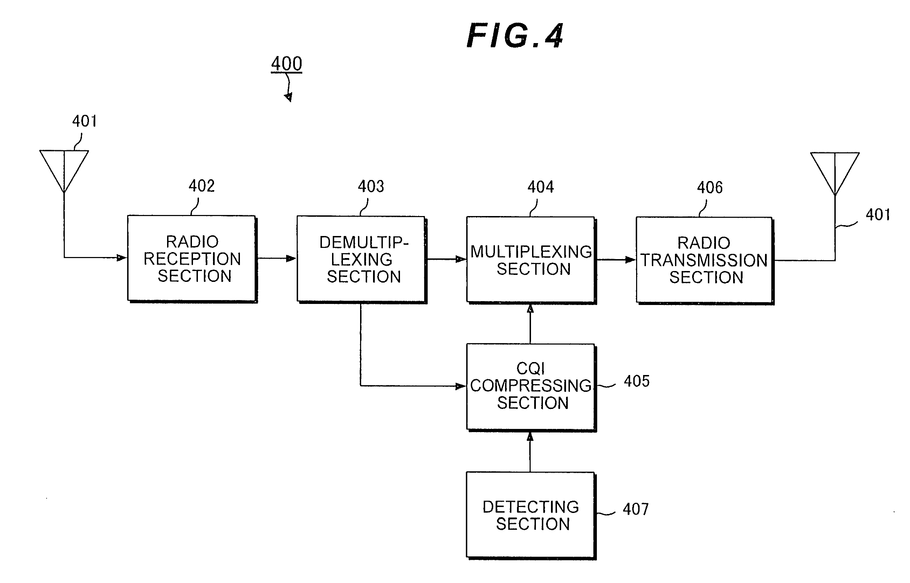

The relay apparatus will be described below. FIG. 4 is a block diagram illustrating a schematic configuration of the relay apparatus. As shown in FIG. 4, the relay apparatus 400 has an antenna 401 (for transmission and reception), radio reception section 402, demultiplexing section 403, multiplexing section 404, CQI compressing section 405, radio transmission section 406 and detecting section 407. Therelay apparatus 400 receives a signal transmitted from each mobile station apparatus in the antenna 401. The received signal is input to the radio reception section 402. The radio reception section 402 converts an analog waveform into a digital signal. The digital signal is input to the demultiplexing section 403. The demultiplexing section 403 demultiplexes the received signal into CQIs and signals except the CQIs, outputs the CQIs to the CQI compressing section 405, and further outputs the signals except the CQIs to the multiplexing section 404.

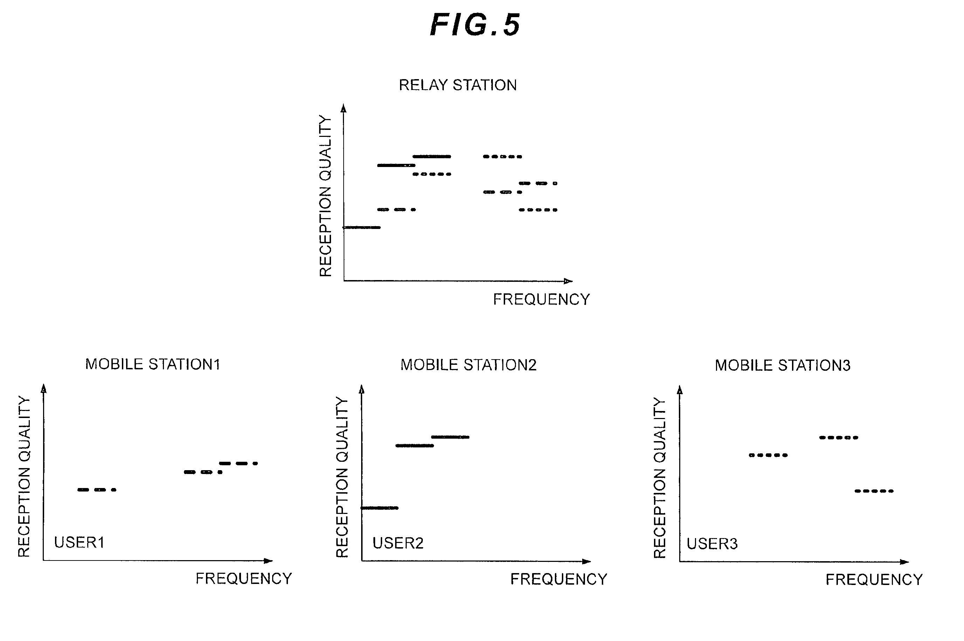

FIG. 5 is a diagram illustrating CQIs notified from each mobile station apparatus and multiplexing of the CQIs of each mobile station apparatus in the relay apparatus. In FIG. 5, the horizontal axis represents the CQI channel number, and the vertical axis represents the reception quality. The CQI compressing section 405 reduces MxU CQIs (U is the number of users that notify the relay apparatus of CQIs, and is an integer of "1" or more) received in the relay apparatus 400 to M' CQIs.

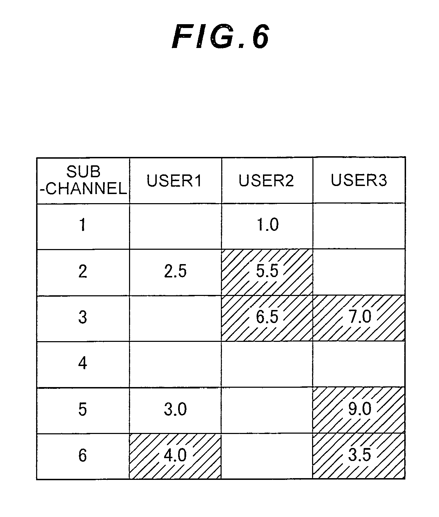

As this method of reducing the information amount, there is a method of selecting higher M' CQIs to notify the base station apparatus. FIGs. 6 to 8 show the reduction of the information amount of CQIs. For example, in FIG. 6, M' is set at "6" (M'=6), and higher 6 CQIs of reception quality shown by diagonal lines are selected from among total 9 CQIs where each of 3 users provides 3 CQIs. The CQIs selected in FIG. 6 are sub-channel 5 of user 3, sub-channel 3 of user 3, sub-channel 3 of user 2, sub-channel 2 of user 2, sub-channel 6 of user 1, and sub-channel 6 of user 3, in this order.

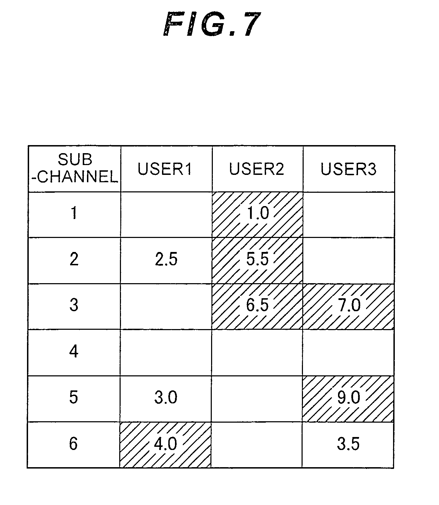

Further, as another method of reducing the information amount of CQIs, there is a reducing method where the relay apparatus selects CQIs sequentially starting a CQI with the highest state, and avoids selecting a plurality of sub-channels in each sub-channel. For example, in FIG. 7, the CQIs are selected in the order of sub-channel 5 of user 3, and sub-channel 3 of user 3. Sub-channel 3 of user 2 has a next higher CQI value, but sub-channel 3 is already selected, and therefore, is not selected in this case. Then, selected are sub-channel 2 of user 2, sub-channel 6 of user 1 and sub-channel 1 of user 2. Finally, when the number of selected CQIs is less than M' , a sub-channel with the highest quality (sub-channel 3 of user 2) is selected from among sub-channels that are not selected yet.

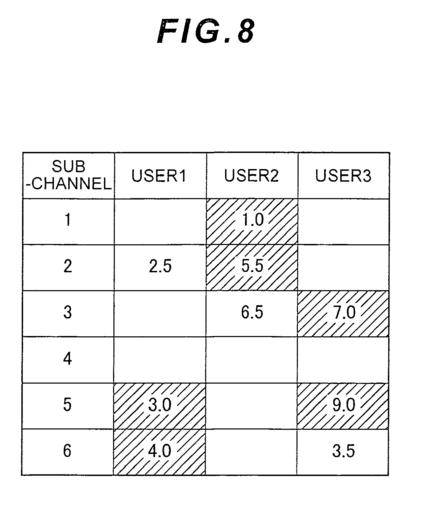

Furthermore, as still another method of reducing the information amount of CQIs, there is a reducing method where the relay apparatus selects CQIs sequentially starting a CQI with the highest state, avoids selecting a plurality of sub-channels in each sub-channel, and selects CQIs so that the difference in the number of pieces of channel quality information selected in each mobile terminal apparatus is smaller than a predetermined value. For example, in FIG. 8, as in FIG. 7, selected are CQIs of sub-channel 5 of user 3, sub-channel 3 of user 3, sub-channel 2 of user 2, sub-channel 6 of user 1 and sub-channel 1 of user 2. At this point, in the process of selection, in the case of the sub-channel in which the CQI is already selected like sub-channel 3 of user 2 and sub-channel 5 of user 1, the sub-channel is skipped, and sub-channel 2 of user 2 and sub-channel 1 of user 2 are preferentially selected. Finally, when the number of selected CQIs is less than M', a CQI is selected so that the number of CQIs of each mobile station apparatus is equal to one another. For example, in the case of FIG. 8, when sub-channels are selected while avoiding already selected sub-channels, since only sub-channel 6 is selected in user 1, sub-channel 5 of user 1 is selected, so that the same number of CQIs is selected with respect to all the users.

The compressing section 405 in the relay apparatus 400 compresses the CQI information of each mobile station apparatus by various reducing methods as described above, and it is thereby possible to reduce the CQI information amount to the base station apparatus from the relay apparatus. In addition, the detecting section 407 constitutes a moving speed detecting section that detects moving speed information of the mobile station apparatus, or a QoS level information acquiring section that acquires QoS (Quality of Service) level information on the downlink of the mobile station apparatus. Then, inreducingCQIs, the CQIs may be reduced in consideration of the moving speed, QoS or the like of the mobile station apparatus. For example, when the moving speed is considered, selected preferentially is a CQI of a mobile station apparatus with low moving speed, or selected preferentially is a CQI of a user with high QoS. As the method of reducing the information amount of CQIs, any method is available which enables the information amount of CQIs to be reduced as described above.

In FIG. 4, the CQIs compressed in the CQI compressing section 405 are input to the multiplexing section 404. The multiplexing section 404 multiplexes signals except the CQIs input from the demultiplexing section 403 and M' CQIs input from the CQI compressing section 405. The output of the multiplexing section 404 is input to the radio transmission section 406. The radio transmission section 406 generates an analog transmission waveform, and transmits a radio signal using the antenna 401.

Thus, the relay apparatus 400 does not notify the base station apparatus of all the CQIs notified from a plurality of mobile station apparatuses, reduces the CQIs, and then, notifies the base station apparatus of CQIs, and it is thereby possible to reduce the information amount of CQIs to the base station apparatus from the relay apparatus.

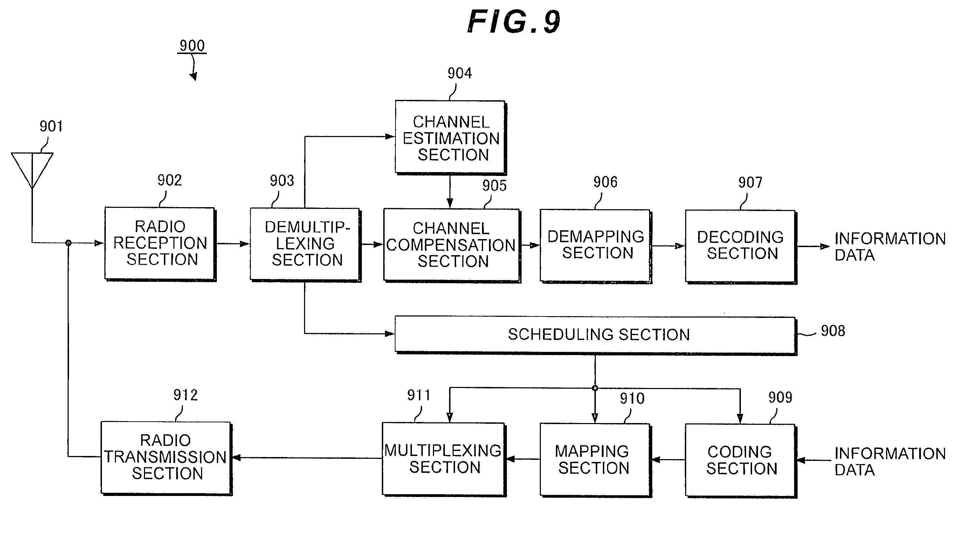

The base station apparatus will be described below. FIG. 9 is a diagram illustrating a schematic configuration of the base station apparatus according to this Embodiment. The base station apparatus 900 has an antenna 901, radio reception section 902, demultiplexing section 903, channel estimation section 904, channel compensation section 905, demapping section 906, decoding section 907, scheduling section 908, coding section 909, mapping section 910, multiplexing section 911, and radio transmission section 912.

An analog signal received in the antenna 901 is converted into a baseband digital signal in the radio reception section 902 and output to the demultiplexing section 903. The demultiplexing section 903 demultiplexes a pilot signal from the input received signal to output to the channel estimation section 904. Further, the demultiplexing section 903 demultiplexes a data signal from the input received signal to output to the channel compensation section 905. Further, the demultiplexing section 903 demultiplexes CQIs of each mobile station apparatus from the input received signal to output to the scheduling section 908.

The channel estimation section 904 obtains a channel estimation value using the input received pilot signal. The obtained channel estimation value is output to the channel compensation section 905. The channel compensation section 905 compensates the data signal for distortion undergone on the channel, using the input received data signal and the channel estimation value input from the channel estimation section 904. The output of the channel compensation section 905 is output to the demapping section 906, and the demapping section 906 decomposes the output signal into bits based on modulation performed in the mobile station apparatus. The output of the demapping section 906 is input to the decoding section 907, and the section 907 performs error correcting decoding on the output signal based on error correcting coding performed by the mobile station apparatus and obtains information data.

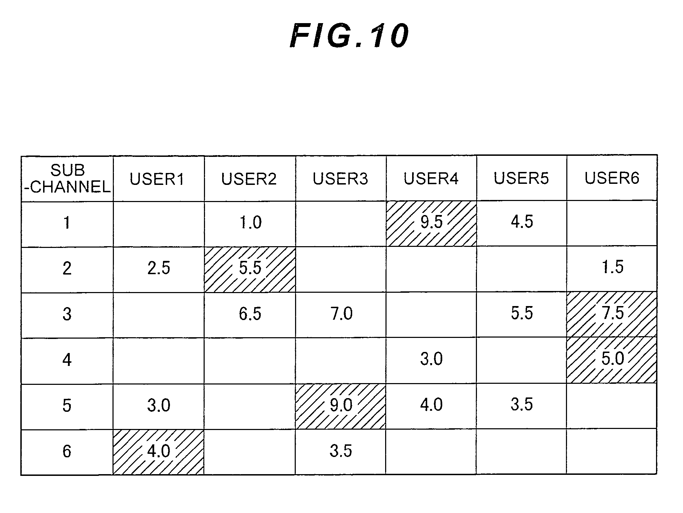

Meanwhile, the scheduling section 908 determines resource (frequency, time) allocation, modulation scheme, coding rate, etc. of each mobile station apparatus on the downlink based on the CQI information notified from each mobile station apparatus. For example, as shown in FIG. 10, when CQIs of users 4 to 6 are notified to the base station apparatus from another relay apparatus, the base station apparatus 900 performs scheduling from the table as shown in FIG. 10. In performing scheduling by "Max-CIR", the scheduling is performed so that sub-channel 1 is allocated to user 4, sub-channel 2 is allocated to user 2, sub-channels 3 and 4 are allocated to user 6, sub-channel 5 is allocated to user 3, and that sub-channel 6 is allocated to user 1. FIG. 10 shows an example of "Max-CIR", and the scheduling section 908 may perform scheduling by "Proportional Fairness" in which resources are allocated to a user that maximizes a difference between a value of the CQI of each sub-channel and an average value of all the sub-channels that are separately notified, or an average value of notified CQIs.

The scheduling section 908 allocates resources as described above, and determines the coding rate and modulation scheme from the communication quality in the allocated resources. The control information (resource allocation, coding rate and modulation scheme) determined in the scheduling section 908 is input to the coding section 909, mapping section 910 and multiplexing section 911.

The downlink information data from the base station apparatus to each mobile station apparatus is input to the coding section 909. The coding section 909 performs coding based on the control information (coding rate) notified from the scheduling section 908, and outputs coded bits to the mapping section 910. The mapping section 910 performs mapping on the coded bits by the control information (resource allocation and modulation scheme) notified from the scheduling section 908 to output to the multiplexing section 911. The multiplexing section 911 multiplexes a pilot signal and control information input from the scheduling section 908, as well as the output of the mapping section 910. The signal multiplexed in the multiplexing section 911 is output to the radio transmission section 912, the baseband digital signal is converted into an analog signal, and then, the signal is transmitted from the antenna 901.

Thus, according to the communication systemaccording to Embodiment 1, a plurality of mobile station apparatuses notifies the relay apparatus of CQIs, the relay apparatus reduces the CQIs notified from the mobile station apparatuses to notify the base station apparatus, and it is thereby possible to reduce the CQI information amount to the base station apparatus from the relay apparatus. By allocating resources obtained by reducing the CQIs to data, it is possible to improve spectral efficiency.

### (Embodiment 2)

In this Embodiment, the relay apparatus decreases CQIs of at least one mobile station apparatus that notifies the relay apparatus of the CQIs, thereby reduces the CQI information, and notifies the base station apparatus of CQIs with a small information amount. As in Embodiment 1, the mobile station apparatus adopts the configuration as shown in FIG. 2. In other words, the mobile station apparatus 200 has the coding section 201, mapping section 202, multiplexing section 203, CQI generating section 204, radio transmission section 205, antenna 206, radio reception section 207, demultiplexing section 208, channel estimation section 209, channel compensation section 210, demapping section 211, and decoding section 212, and functions as in Embodiment 1.

Further, as in Embodiment 1, the relay apparatus adopts the configuration as shown in FIG. 4. In other words, the relay apparatus 400 has the antenna 401 (for transmission and reception), radio reception section 402, demultiplexing section 403, multiplexing section 404, CQI compressing section 405, and radio transmission section 406. Herein, the CQI compressing section 405 reduces MxU CQIs (U is the number of users that notify the relay apparatus of CQIs, and is an integer of "1" or more) received from respective mobile station apparatuses.

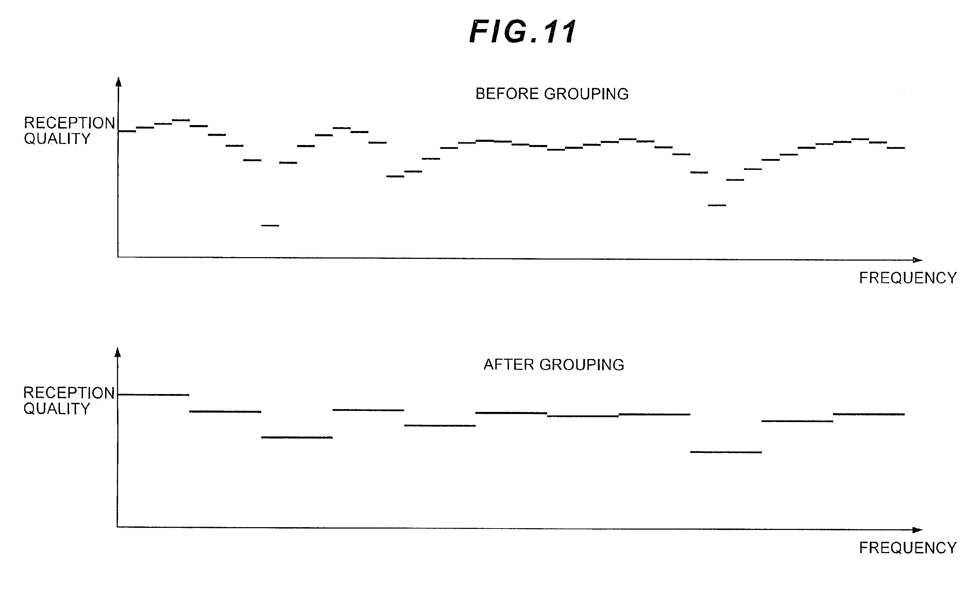

In this Embodiment, as a CQI compressing method in theCQIcompressingsection405, grouping is used. Forexample, as shown in the upper diagram in FIG. 11, the case is described where the mobile station apparatus notifies CQIs, and the CQIs are input to the CQI compressing section 405 in the relay apparatus 400. In addition, the upper diagram in FIG. 11 shows the case that CQIs of the entire band are notified, but a case may be adopted where only part is notified. The CQI compressing section 405 groups sub-channels (a sub-channel is the set of one or more subcarriers) to reduce the CQIs. A method of determining quality subsequent to grouping may be any method such as averaging in the sub-channel, and maximum or minimum quality.

As shown in the lower diagram in FIG. 11, the reception quality for each sub-channel in the upper diagram in FIG. 11 is grouped every four sub-channels, and thereby reduces the CQIs. In addition, since grouping is to combine one or more sub-channels, all the sub-channels are may be grouped into a single group. Further, the number of sub-channels to group may be different between mobile station apparatuses. In addition, grouping of sub-channels is performed with reference to the reception quality of the sub-channel of the mobile station apparatus, intensity of frequency selection, moving speed of the mobile station apparatus, QoS, etc. For example, when the moving speed is considered, CQIs of a mobile station apparatus with high moving speed may be preferentially grouped, or CQIs of a user with low QoS may be preferentially grouped.

The CQIs compressed in the CQI compressing section 405 are input to the multiplexing section 404. The multiplexing section 404 multiplexes signals except the CQIs input from the demultiplexing section 403 and the grouped CQIs obtained in the CQI compressing section 405. The output of the multiplexing section 404 is input to the radio transmission section 406. The radio transmission section 406 generates an analog transmission waveform, and transmits a radio signal using the antenna 401.

Thus, the relay apparatus does not notify the base station apparatus of all the CQIs of sub-channels of which a plurality of mobile station apparatuses notifies the relay apparatus, groups CQIs of sub-channels, thereby reduces the CQIs, and then, notifies the base station apparatus of CQIs, and it is thereby possible to reduce the information amount of CQIs to the base station apparatus from the relay apparatus.

The base station apparatus will be described below. As in Embodiment 1, the base station apparatus adopts the configuration shown in FIG. 9. In other words, the base station apparatus 900 has the antenna 901, radio reception section 902, demultiplexing section 903, channel estimation section 904, channel compensation section 905, demapping section 906, decoding section 907, scheduling section 908, coding section 909, mapping section 910, multiplexing section 911, and radio transmission section 912. The scheduling section 908 allocates resources (frequency, time) of each mobile station apparatus on the downlink by the scheduling method such as "Max-CIR" and "Proportional Fairness" based on the CQI information notified from each mobile station apparatus. Further, the scheduling section 908 determines the coding rate and modulation scheme from the communication quality in the allocated resources. The control information (resource allocation, coding rate and modulation scheme) determined in the scheduling section 908 is input to the coding section 909, mapping section 910 and multiplexing section 911.

Thus, according to Embodiment 2, a plurality of mobile station apparatuses notifies the relay apparatus of CQIs for each sub-channel, the relay apparatus groups the CQIs for each sub-channel notified from the mobile station apparatus, thereby reduces the CQIs, and notifies the base station apparatus of CQIs, and it is thereby possible to reduce the CQI information amount to the base station apparatus from the relay apparatus. By allocating resources obtained by reducing the CQIs to data, it is possible to improve spectral efficiency.

### (Embodiment 3)

In this Embodiment, the relay apparatus receives CQIs of a plurality of mobile station apparatuses, decreases the CQI information of the plurality of mobile station apparatuses, and notifies the base station apparatus of CQIs with a small information amount. As in Embodiment 1, the mobile station apparatus adopts the configuration as shown in FIG. 2. In other words, the mobile station apparatus 200 has the coding section 201, mapping section 202, multiplexing section 203, CQI generating section 204, radio transmission section 205, antenna 206, radio reception section 207, demultiplexing section 208, channel estimation section 209, channel compensation section 210, demapping section 211, and decoding section 212. In Embodiment 3, only the configuration of the CQI generating section 204 is different from that in Embodiment 1.

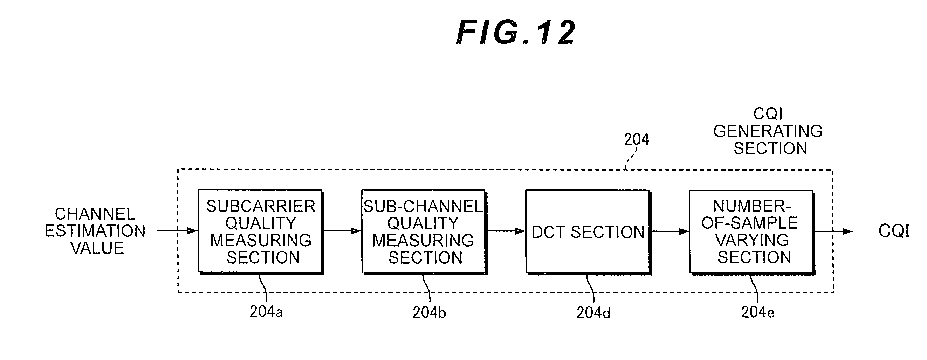

FIG. 12 is a diagram illustrating a schematic configuration of the CQI generating section 204 of the mobile station apparatus according to this Embodiment. As shown in FIG. 12, the CQI generating section 204 according to Embodiment 3 has the subcarrier quality measuring section 204a, sub-channel quality measuring section 204b, DCT (Discrete Cosine Transform) section 204d, and number-of-sample varying section 204e. A channel estimation value input from the channel estimation section 209 as shown in FIG. 2 is input to the subcarrier quality measuring section 204a. The subcarrier quality measuring section 204a measures reception quality for each subcarrier from the channel estimation value to output to the sub-channel quality measuring section 204b.

The sub-channel quality measuring section 204b measures the reception quality for each sub-channel from the input quality for each subcarrier to output to the DCT section 204d. In addition, the sub-channel is comprised of one or more subcarriers. In addition, a method of determining the sub-channel quality may be any method such as averaging in the sub-channel, and maximum or minimum quality.

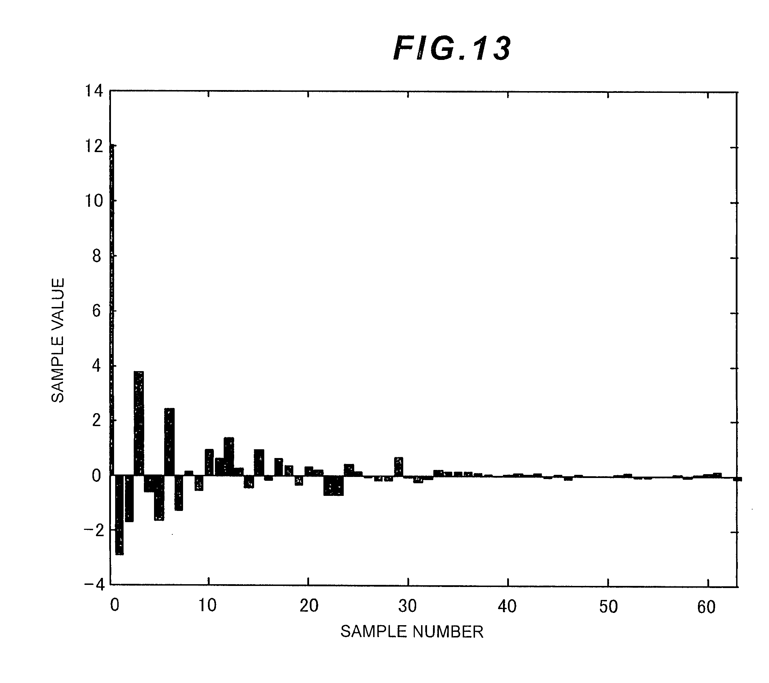

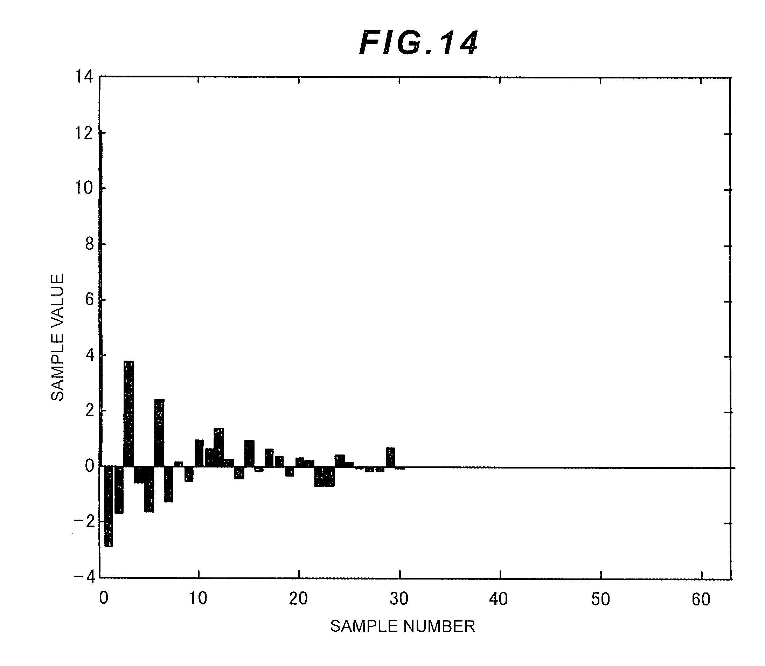

The DCT section 204d performs DCT on the obtained reception quality for each sub-channel. Herein, FIG. 13 shows the result of performing DCT on the reception quality of 64 samples. In FIG. 13, the horizontal axis represents the sample number, and the vertical axis represents a sample value. The DCT section 204d outputs sample values of 64 points obtained by thus performing DCT to the number-of-sample varying section 204e. The number-of-sample varying section 204e varies the input sample values of 64 points to different sample values to output as the CQI. For example, as shown in FIG. 14, the section 204e reduces sample values of 64 points to those of 32 points as the CQI.

The relay apparatus will be described below. As in Embodiment 1, the relay apparatus according to Embodiment 3 adopts the configuration as shown in FIG. 4. In other words, the relay apparatus 400 has the antenna 401 (for transmission and reception), radio reception section 402, demultiplexing section 403,multiplexing section 404,CQI compressing section 405, and radio transmission section 406, and functions as in Embodiment 1.

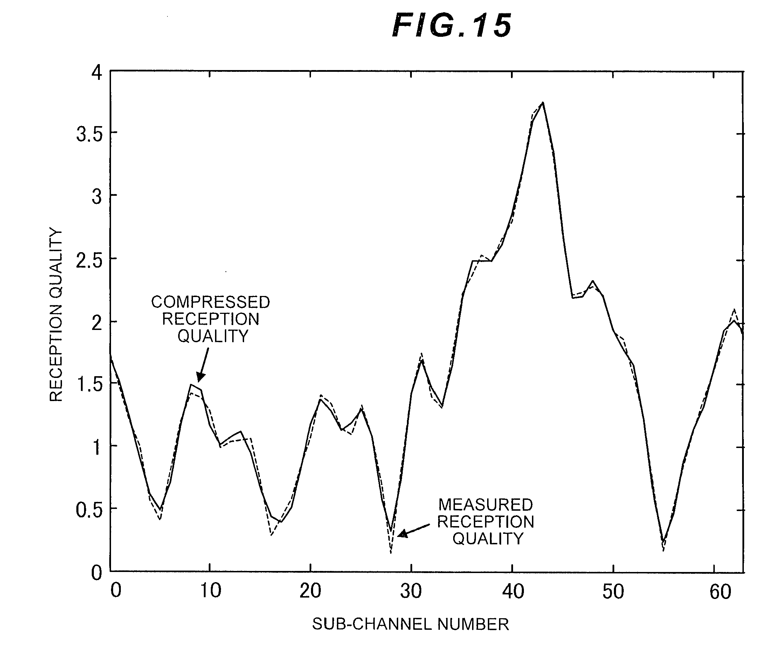

In this Embodiment, as a reducing method in the CQI compressing section 405, the number of points of DCT is reduced. The CQI compressing section 405 determines a CQI to reduce the number of points of DCT with reference to the reception quality of the sub-channel, intensity of frequency selection, moving speed of the mobile station apparatus, QoS, etc. from notified CQIs of respective users. For example, when the mobile station apparatus notifies sample values of 32 points as the CQI, the relay apparatus performs IDCT (Inverse Discrete Cosine Transform), and is capable of obtaining the reception quality as shown by the solid line shown in FIG. 15. In this Embodiment, the CQI compressing section 405 reduces the number of points of DCT to notify the base station apparatus.

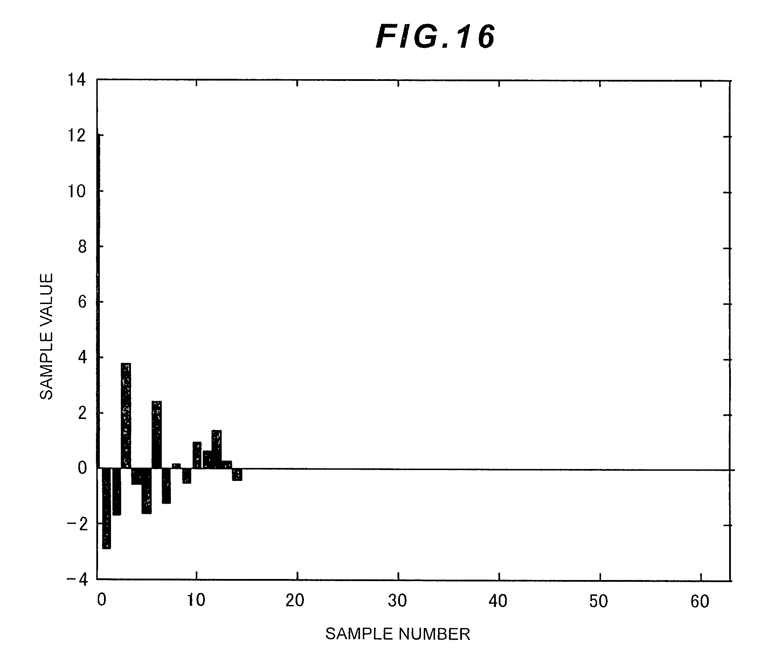

FIG. 16 is a diagram showing a result of selecting 16 points of a result of DCT, and an IDCT result of FIG. 16 is as shown by the solid line in FIG. 16. As selection of the mobile station apparatus to vary the number of points, the number of points of DCT of a mobile station apparatus with high moving speed may be preferentially reduced, or the number of points of DCT of a mobile station apparatus with low QoS may be preferentially reduced.

The CQIs reduced in the CQI compressing section 405 are input to the multiplexing section 404. The multiplexing section 404 multiplexes signals except the CQIs input from the demultiplexing section 403 and the CQIs with the number of DCT points reduced obtained in the CQI compressing section 405. The output of the multiplexing section 404 is output to the radio transmission section 406. The radio transmission section 406 generates an analog transmission waveform, and transmits a radio signal using the antenna 401.

Thus, the relay apparatus according to Embodiment 3 does not notify the base station apparatus of all the CQIs of sub-channels of which a plurality of mobile station apparatuses notifies the relay apparatus, decreases the number of points of DCT, and then, notifies the base station apparatus of CQIs, and it is thereby possible to reduce the information amount of CQIs to the base station apparatus from the relay apparatus.

The base station apparatus will be described below. As in Embodiment 1, the base station apparatus adopts the configuration shown in FIG. 9. In other words, the base station apparatus 900 has the antenna 901, radio reception section 902, demultiplexing section 903, channel estimation section 904, channel compensation section 905, demapping section 906, decoding section 907, scheduling section 908, coding section 909, mapping section 910, multiplexing section 911, and radio transmission section 912.

The scheduling section 908 performs IDCT on the CQI information notified from each mobile station apparatus, thereby restores the reception quality for each sub-channel, and allocates resources (frequency, time) of each mobile station apparatus on the downlink by the scheduling method such as "Max-CIR" and "Proportional Fairness" using the obtained reception quality for each sub-channel of each user. Further, the scheduling section 908 determines the coding rate and modulation scheme from the communication quality in the allocated resources. The control information (resource allocation, coding rate and modulation scheme) determined in the scheduling section 908 is input to the coding section 909, mapping section 910 and multiplexing section 911.

Thus, according to Embodiment 3, a plurality of mobile station apparatuses notifies the relay apparatus of CQIs subjected to DCT, the relay apparatus decreases the number of points of DCT in the CQI notified from the mobile station apparatus to notify the base station, and it is thereby possible to reduce the CQI information amount to the base station apparatus from the relay apparatus. By allocating resources obtained by reducing the CQIs to data, it is possible to improve spectral efficiency.

### (Embodiment 4)

In this Embodiment, the relay apparatus reduces the CQI information of CQIs that are notified from a plurality of mobile station apparatuses to the relay apparatus, and notifies the base station apparatus of CQIs with a small information amount.

As in Embodiment 1, the mobile station apparatus adopts the configuration as shown in FIG. 2. In other words, the mobile station apparatus 200 has the coding section 201, mapping section 202, multiplexing section 203, CQI generating section 204, radio transmission section 205, antenna 206, radio reception section 207, demultiplexing section 208, channel estimation section 209, channel compensation section 210, demapping section 211, and decoding section 212. In Embodiment 3, only the function of the CQI generating section 204 is different from that in Embodiment 1.

As shown in FIG. 3, the CQI generating section 204 has the subcarrier quality measuring section 204a, sub-channel quality measuring section 204b and Top-M selecting section 204c. A channel estimation value from the sub-channel estimation section 209 as shown in FIG. 2 is input to the subcarrier quality measuring section 204a. Using the channel estimation value, the subcarrier quality measuring section 204a calculates a value indicative of communication quality such as SNR, CNR and MCS. The communication quality for each subcarrier measured in the subcarrier quality measuring section 204a is input to the sub-channel quality measuring section 204b. The sub-channel quality measuring section 204b obtains the quality for each sub-channel based on the communication quality for each subcarrier to perform quantization, and outputs the resultant to the Top-M selecting section 204c. In addition, the sub-channel is comprised of one or more subcarriers. Further, a method of determining the sub-channel quality may be any method such as averaging in the sub-channel, and maximum or minimum quality. The Top-M selecting section 204c selects higher M (M is an integer of "1" or more) pieces of communication quality of sub-channels from the communication quality for each sub-channel to output to the multiplexing section as CQIs.

The relay apparatus will be described below. As in Embodiment 1, the relay apparatus according to this Embodiment adopts the configuration as shown in FIG. 4. In other words, the relay apparatus 400 has the antenna 401 (for transmission and reception), radio reception section 402, demultiplexing section 403, multiplexing section 404, CQI compressing section 405, and radio transmission section 406.

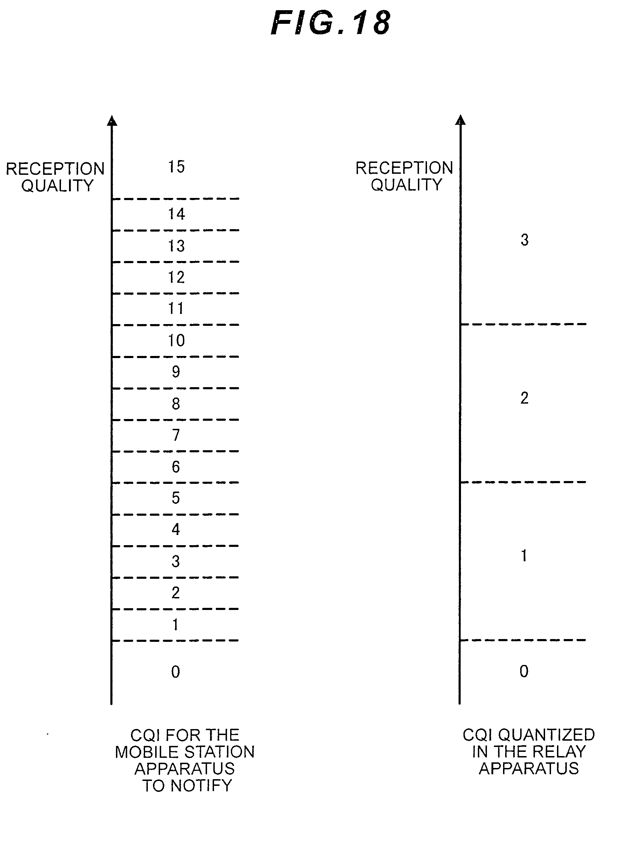

In this Embodiment, as a reducing method in the CQI compressing section 405, the number of quantization bits of the reception quality of the sub-channel is reduced. The CQI compressing section 405 determines a CQI to reduce the number of quantization bits with reference to the reception quality of the sub-channel, intensity of frequency selection, moving speed of the mobile station apparatus, QoS, etc. from notified CQIs of respective users. For example, when the mobile station apparatus notifies the reception quality quantized by 4 bits as the CQI as in the diagram on the left side of FIG. 18, the relay apparatus performs quantization while changing to 2 bits as in the diagram on the right side of FIG. 18. Herein, the number of quantization bits of the CQI of a mobile station apparatus with high moving speed may be preferentially reduced, or the CQI of a user with low QoS may be preferentially reduced.

The CQIs reduced in the CQI compressing section 405 are input to the multiplexing section 404. The multiplexing section 404 multiplexes signals except the CQIs input from the demultiplexing section 403 and the CQIs with the number of quantization bits reduced obtained in the CQI compressing section 405. The output of the multiplexing section 404 is output to the radio transmission section 406. The radio transmission section 406 generates an analog transmission waveform, and transmits a radio signal using the antenna 401.

Thus, the relay apparatus according to Embodiment 3 does not notify the base station apparatus of all the CQIs of sub-channels of which a plurality of mobile station apparatuses notifies the relay apparatus, decreases the number of quantization bits, and then, notifies the base station apparatus of CQIs, and it is thereby possible to reduce the information amount of CQIs to the base station apparatus from the relay apparatus.

The base station apparatus will be described below. As in Embodiment 1, the base station apparatus according to this Embodiment adopts the configuration shown in FIG. 9. In other words, the base station apparatus 900 has the antenna 901, radio reception section 902, demultiplexing section 903, channel estimation section 904, channel compensation section 905, demapping section 906, decoding section 907, scheduling section 908, coding section 909, mapping section 910, multiplexing section 911, and radio transmission section 912.

The scheduling section 908 allocates resources (frequency, time) of each mobile station apparatus on the downlink by the scheduling method such as "Max-CIR" and "Proportional Fairness" using the reception quality for each sub-channel of each user obtained by using the CQI information notified from each mobile station apparatus. Further, the scheduling section 908 determines the coding rate and modulation scheme from the communication quality in the allocated resources. The control information (resource allocation, coding rate and modulation scheme) determined in the scheduling section 908 is input to the coding section 909, mapping section 910 and multiplexing section 911.

Thus, according to Embodiment 4, a plurality of mobile station apparatuses notifies the relay apparatus of CQIs, the relay apparatus decreases the number of quantization bits of the CQI notified from the mobile station apparatus to notify the base station apparatus, and it is thereby possible to reduce the CQI information amount to the base station apparatus from the relay apparatus. By allocating resources obtained by reducing the CQIs to data, it is possible to improve spectral efficiency.

## Claims

1. A relay apparatus (400) that is applied to a communication system in which a control station apparatus (190) and a terminal apparatus (200) perform wireless communications using a plurality of sub-channels and that relays the communications between the control station apparatus (190) and the terminal apparatus (200), comprising:
a receiving section (402) that receives channel quality information indicative of channel quality of sub-channels from the terminal apparatus (200);
a compressing section (405) that compresses an information amount of the received channelqualityinformation and that generates notification information to notify the control station apparatus (190); and
a transmitting section that transmits the generated notification information to the control station apparatus (190) .

2. The relay apparatus (400) according to claim 1, wherein the receiving section (402) receives the channel quality information from a plurality of terminal apparatus (200) es, and the compressing section (405) selects a part from a plurality of received channel quality information to generate the notification information.

3. The relay apparatus (400) according to claim 2, wherein the compressing section (405) selects the channel quality information in descending order of the reception quality.

4. The relay apparatus (400) according to claim 2, wherein the compressing section (405) preferentially selects the channel quality information with the highest reception quality from each sub-channel one by one.

5. The relay apparatus (400) according to claim 4, wherein the compressing section (405) selects the channel quality information so that a difference in the number of pieces of the channel quality information selected in each terminal apparatus (200) is smaller than a predetermined value.

6. The relay apparatus (400) according to claim 2, further comprising:
a moving speed detecting section (407) that acquires moving speed information of the terminal apparatus (200),
wherein the compressing section (405) preferentially selects the channel quality information of a terminal apparatus (200) with the acquired moving speed being low.

7. The relay apparatus (400) according to claim 2, further comprising:
a QoS level information acquiring section (407) that acquires QoS level information on the downlink of the terminal apparatus (200),
wherein the compressing section (405) preferentially selects the channel quality information of a terminal apparatus (200) with the acquired QoS level being high.

8. The relay apparatus (400) according to claim 1, wherein the receiving section (402) receives channel quality information of a plurality of channels from the terminal apparatus (200), and the compressing section (405) groups the channel quality information of the plurality of channels into at least one group, generates group quality information from channel quality information belonging to the group, and selects at least one group quality information to generate the notification information.

9. The relay apparatus (400) according to claim 1, wherein the receiving section (402) receives orthogonally transformed reception quality information obtained by performing orthogonal transform on the reception quality for each sub-channel from the terminal apparatus (200), and the compressing section (405) selects part of the orthogonally transformed reception quality information to generate the notification information.

10. The relay apparatus (400) according to claim 1, wherein the compressing section (405) reduces the number of quantization bits indicative of the channel quality information to generate the notification information.

11. A communication system in which a control station apparatus (190) and a terminal apparatus (200) perform wireless communications using a plurality of sub-channels via a relay apparatus (400), wherein the terminal apparatus (200) transmits channel quality information indicative of channel quality of sub-channels to the relay apparatus (400),
the relay apparatus (400) compresses an information amount of the channel quality information received from the terminal apparatus (200) to generate notification information, and transmits the generated notification information to the control station apparatus (190), and
the control station apparatus (190) receives the notification information from the relay apparatus (400).

12. A communication system comprising:
the relay apparatus (400) according to any one of claims 1 to 10;
at least one terminal apparatus (200) that transmits channel quality information indicative of reception quality of sub-channels to the relay apparatus (400); and
a control station apparatus (190) that receives the channel quality information with an information amount compressed from the relay apparatus (400).

13. A communication method of a relay apparatus (400) that is applied to a communication system in which a control station apparatus (190) and a terminal apparatus (200) perform wireless communications using a plurality of sub-channels and that relays the communications between the control station apparatus (190) and the terminal apparatus (200), including at least the steps of:
receiving, ina receiving section (402), channel quality information indicative of channel quality of sub-channels from the terminal apparatus (200);
compressing, in a compressing section (405), an information amount of the received channel quality information and generating notification information to notify the control station apparatus (190); and
transmitting, in a transmitting section, the generated notification information to the control station apparatus (190).
